# FASCICULE DE BREVET EUROPEEN

(11) **EP 0 775 843 B1**
(45) Date de publication et mention de la délivrance du brevet: **10.04.2002**
(21) Numéro de dépôt: 96402531.6
(22) Date de dépôt: 25.11.1996
(51) Int. Cl.: F16F 9/30

(54) **Structure formant filtre mécanique, en particulier anti-choc**
Stossdämpfende Struktur, wie mechanischer Filter
Anti-shock mechanical filter structure

(30) Priorité: 27.11.1995 FR 9514032
(43) Date de publication de la demande: 28.05.1997
(73) Titulaire: THALES SYSTEMES AEROPORTES S.A., 78990 Elancourt (FR); Musthane, 59800 Lille (FR)
(72) Inventeur: Sutra, Bernard, 92320 Chatillon (FR); Josien, Daniel, 59370 Mons en Baroeuil (FR)
(74) Mandataire: Plaçais, Jean-Yves

(56) Documents cités:
- WO-A-92/11489
- DE-U- 7 331 639
- DE-U- 7 623 573
- GB-A- 737 405
- US-A- 2 906 525
- US-A- 5 330 249
- PATENT ABSTRACTS OF JAPAN vol. 11, no. 89 (C-411), 19 Mars 1987 & JP 61 243858 A (KIYUUBITSUKU KK), 30 Octobre 1986,
- PATENT ABSTRACTS OF JAPAN vol. 10, no. 171 (M-489) [2227] , 17 Juin 1986 & JP 61 021436 A (KIYUUBITSUKU ENGINEERING KK), 30 Janvier 1986,
- PATENT ABSTRACTS OF JAPAN vol. 10, no. 208 (C-361), 22 Juillet 1986 & JP 61 051035 A (KIYUUBITSUKU KK), 13 Mars 1986,
- PATENT ABSTRACTS OF JAPAN vol. 014, no. 523 (M-1049), 16 Novembre 1990 & JP 02 219644 A (INABA RUBBER KK), 3 Septembre 1990,
- PATENT ABSTRACTS OF JAPAN vol. 014, no. 087 (M-0937), 19 Février 1990 & JP 01 299338 A (KIYUUBITSUKU ENG:KK), 4 Décembre 1989,

## Description

L'invention concerne la protection d'objets contre des chocs ou autres effets mécaniques.

Il existe actuellement une très grande variété de protections de type "filtre mécanique", parmi lesquelles les structures "coussin", comprenant une enveloppe logeant un matériau amortisseur. Une structure de ce type est connue par le document JP-61243858, reflétant l'état de la technique conforme au préambule de la revendication 1.

Des difficultés surviennent lorsque l'effet mécanique à combattre devient très important, en énergie et/ou en puissance, devant la résistance mécanique de l'objet à protéger.

Ces difficultés sont solubles lorsqu'on dispose d'une place suffisante pour loger un volume de matière d'amortissement en rapport avec l'effet mécanique à combattre.

Par contre des problèmes très délicats se posent lorsque la place disponible est limitée, et l'effet mécanique important, comme on le verra plus loin. Ces problèmes sont encore plus délicats s'il est souhaité que la structure protectrice soit réutilisable.

La présente invention définie par la revendication 1 vient apporter une solution à ce problème.

Après de nombreux essais, il a été découvert qu'un dispositif comportant une structure de type "coussin" présente des propriétés très intéressantes, lorsque l'on aménage de manière convenable la coopération entre une enveloppe principalement réalisée sous la forme d'un film mince d'un matériau à fort coefficient d'allongement et grande élasticité, et un matériau amortisseur, dont le fluage varie avec la pression, de préférence diminue avec la pression.

Cette coopération procure au dispositif une réponse, en terme de filtrage mécanique, selon un effet de ressort, suivi d'un effet d'amortisseur.

Bien que d'autres matériaux puissent être envisagés, un matériau du type polyuréthanne thermoplastique est actuellement préféré pour l'enveloppe, en coopération avec un gel de silicone, ou un autre produit semblable ayant des caractéristiques propres de viscosité, ce que l'on appelle ici "gel".

D'autres caractéristiques et avantages de l'invention apparaîtront à l'examen de la description détaillée ci-après, et des dessins annexés, sur lesquels:
- la figure 1 est une vue en perspective donnant la forme géométrique d'un mode de réalisation de la structure;
- la figure 2 est une vue semblable à la figure 1, mais cherchant à refléter sa forme réelle;

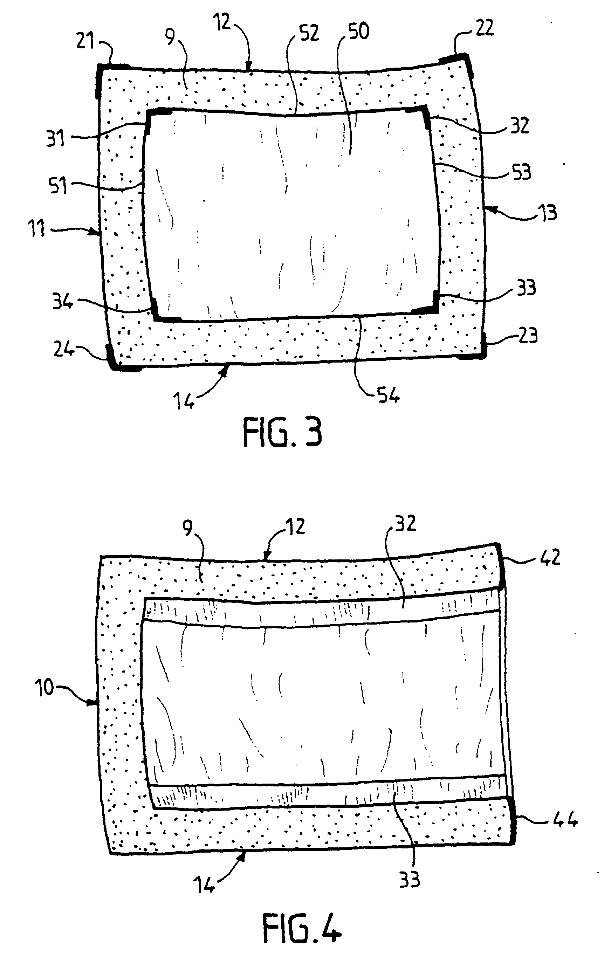

- la figure 3 est une vue en coupe transversale selon le plan P de la figure 2, vers l'arrière;
- la figure 4 est une vue en coupe longitudinale selon le plan Q de la figure 2, vers la droite ;
- la figure 5 est du diagramme temporel illustrant l'accélération appliquée et l'accélération ressentie par un équipement;
- la figure 6 est un diagramme fréquentiel illustrant l'excitation appliquée et l'accélération ressentie par un équipement, les deux en échelle logarithmique;
- les figures 7 et 8 sont des schémas électriques équivalents; et
- la figure 9 est un diagramme tension/temps correspondant à ces schémas équivalents.

Un problème particulier posé a été de protéger un équipement électronique de mesure, de dimensions environ 200 x 150 x 90 mm, et de masse 3 kg, de façon qu'il supporte un choc correspondant à une accélération de 5000 m/s² (500 g) pendant 3 millisecondes (forme d'onde demi-sinusoïdale). La structure résiliente (anti-choc) devait occuper une surépaisseur d'environ 2 cm de part et d'autre de l'équipement.

Des essais fondés notamment sur des mousses, dont certaines à "cellules ouvertes", des enveloppes gonflables par gaz ou par eau, et des amortisseurs mécaniques à ressort n'ont pas donné satisfaction, pour des raisons d'efficacité insuffisante et/ou de volume occupé trop important. Ayant eu connaissance des propriétés d'amortissement des gels, les Demanderesses ont fait de premiers essais avec des gels associés à d'autres substances. Ces essais se sont avérés insuffisants, à cause d'un phénomène de talonnement: après l'effet d'amortissement attendu, l'objet à protéger touche le fond du support. L'insertion de billes, microbilles, ou autres matériaux propres à augmenter l'inertie du gel, n'a pas permis d'éviter ce talonnement.

Il a alors été envisagé de revenir à une structure de type coussin, où le gel est enfermé dans une enveloppe. Les premiers essais de cette catégorie ont été faits avec une structure creusée, ouverte sur une face, possédant donc des parois d'épaisseur globale 20 mm environ, délimitées par un film polyuréthanne d'épaisseur 1 mm. Un phénomène de talonnement a là aussi été observé.

De façon inattendue, il a été observé qu'en diminuant l'épaisseur du film, les résultats sont nettement améliorés. C'est ainsi que l'on en est arrivé à la structure que l'on décrira maintenant.

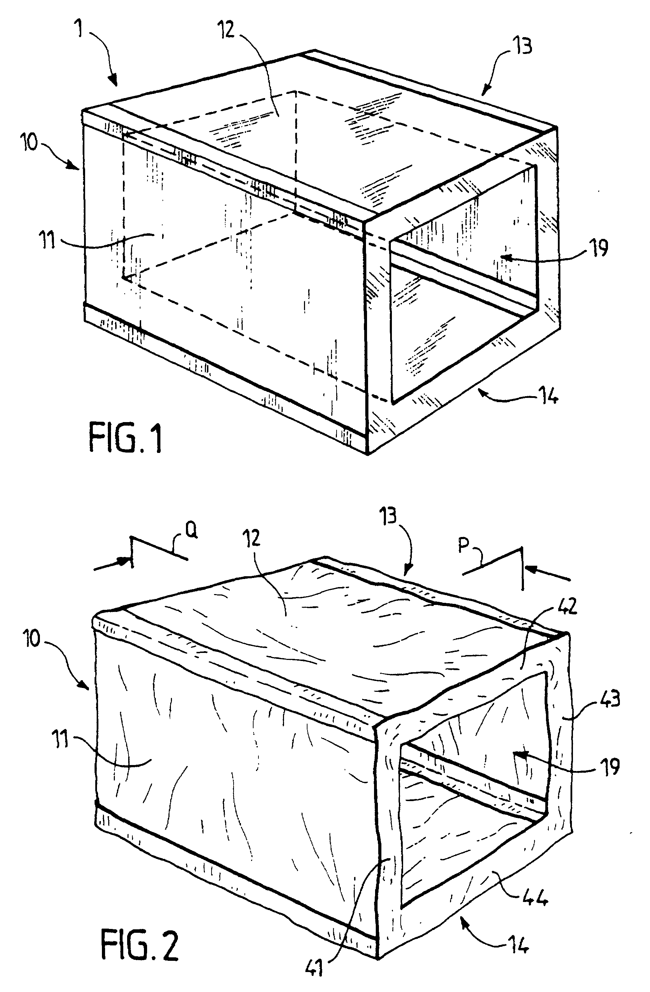

Cette structure définit un étui de forme générale interne et externe parallélépipédique, avec une ouverture d'un côté pour l'introduction d'un objet, qui est par exemple, comme déjà indiqué, un équipement électronique de mesure. La forme géométrique de l'étui est illustrée sur la figure 1. Cet étui 1 est délimité extérieurement par un fond 10, ainsi que quatre faces latérales 11 et 13 de mêmes dimensions, et 12 et 14 également de mêmes dimensions. Il est délimité intérieurement par un fond 50, ainsi que des faces 51 à 54, homologues des faces 11 à 14. Du côté de l'ouverture 19, les bords sont définis par des bandes 41 à 44. Dans le mode de réalisation utilisé, les faces internes et externes sont réalisées par un film d'épaisseur 400 micromètres, par exemple en polyuréthanne thermoplastique suivant : UF 3 de la Société PLATE BONN GmbH. Des caractéristiques de ce produit sont données dans le tableau ci-après.

**TABLEAU I**

| Grandeur physique | Unité | Valeur | Norme |
|---|---|---|---|
| Plage de fusion | °C | 195-225 | Kofler-Bank |
| Densité | Mg/m³ | 1,13 | DIN 53 479 |
| Dureté Shore A | | 86 ± 3 | DIN 53 505 |
| Résistance à la traction | MPa | 50-65 | DIN 53 455 |
| Allongement à la rupture | % | 500-600 | DIN 53 455 |
| Allongement permanent | % | 80-120 | DIN 53 455 |
| Contrainte à 100 % d'allongement | MPa | 8 | DIN 53 455 |
| Contrainte à 300 % d'allongement | MPa | 15 | DIN 53 455 |
| Résistance à la déchirure amorcée (Graves) | kN/m | 55-65 | DIN 53 515 |
| Perte par abrasion | mm3 | 20-25 | DIN 53 516 |
| Elasticité | | 33 | DIN 53 512 |
| scléroscopique | % | | |
| Déformation permanente | % | | |
| sous pression R_{dv} | | | DIN 53 517 |
| 70 h à 22°C | | 15-25 | |
| 24 h à 70°C | | 50-65 | |
| Absorption d'eau (24h/H₂O/20°C) | % | 1,30 | DIN 53 475 |
| Perméabilité à la vapeur d'eau (éprouvette de 2mm) | g/m2.d | 4,7 | DIN 53 122 |

Ce produit peut être fixé sur lui-même et sur d'autres matériaux par (thermo-) collage et/ou soudage. Il est alimentaire, imperméable à l'eau ou la vapeur, et résiste bien à différentes essences et huiles. Il possède par ailleurs une bonne tenue en température, à savoir de -50°C à 100°C, voire plus en période courte. Il est aussi réparable par vulcanisation. Enfin et surtout, son aptitude à la déformation élastique peut atteindre 600%. La dureté Shore ne varie pas ou peu avec l'allongement élastique.

On part de deux ébauches avant pliage, dont l'une correspond au fond externe 10 et aux quatre faces externes 11 à 14, l'autre au fond interne 50 et aux quatre faces internes 51 à 54. Après pliage, l'assemblage en forme est réalisé à l'aide de bandes (21 à 24 à l'extérieur, 31 à 34 à l'intérieur) du même matériau que précédemment, mais d'épaisseur plus forte, par exemple 1 mm. L'ensemble est alors monté sur un, de préférence deux gabarits ou moules (interne et externe), qui le maintiennent en forme. L'épaisseur de paroi de l'étui, entre deux films, est typiquement ici un peu moins de 23 mm. Ensuite, on remplit l'espace entre les parties externe et interne de l'enveloppe par un gel de silicone, qui est par exemple le Rhodorsil RTV 08-B ou bien le RTV 1508-A/B vendus par RHONE-POULENC. Des caractéristiques de ce produit sont données dans le tableau ci-après :

**TABLEAU II**

| Grandeur physique | Unité | Valeur | Norme |
|---|---|---|---|
| Densité à 25° | | 0,97 | |
| Viscosité | m Pa.s | 650 | |
| Consistance au pénétromètre | | 240 | ASTMD 217 |
| Comportement thermique | °C | -50 à +200 | |
| Rigidité diélectrique | kV/mm | 18 et CEI243 | AFMOR C28225 |

Il s'agit d'un produit à deux composants, dont un accélérateur de réticulation. Ils sont mélangés juste avant remplissage. Après dégazage du mélange liquide, un remplissage en source à partir du fond de l'enveloppe est réalisé progressivement. La réticulation intervient ensuite, de préférence sous léger chauffage. Un ou des cycles thermiques sous vide allant jusqu'à par exemple 80° sont avantageusement prévus pour améliorer la performance du complexe que constitue le gel polyuréthanne. Les bandes 41 à 44 sont alors placées sur les bords libres de l'ouverture de l'étui, pour en assurer l'étanchéité totale.

Le remplissage est effectué avec soin, de préférence sous légère surpression, de manière à laisser aussi peu d'air que possible entre les deux parois de l'étui. La structure présente alors à la fois une géométrie définie par le pliage et la construction de l'enveloppe, et une souplesse qui la rend quelque peu "informe", comme visible sur la figure 2.

De façon générale, la fixation du film surajouté (épaisseur 1mm) sur le film de base à 400 micromètres s'effectue par thermosoudage ou collage.

Des renforts peuvent également être prévus au niveau des parties "pliées" du film, sous la forme de bandes d'épaisseur 400 micromètres par exemple, fixées comme ci-dessus. On peut faire de même sur les grandes faces, au voisinage des bords libres de l'étui.

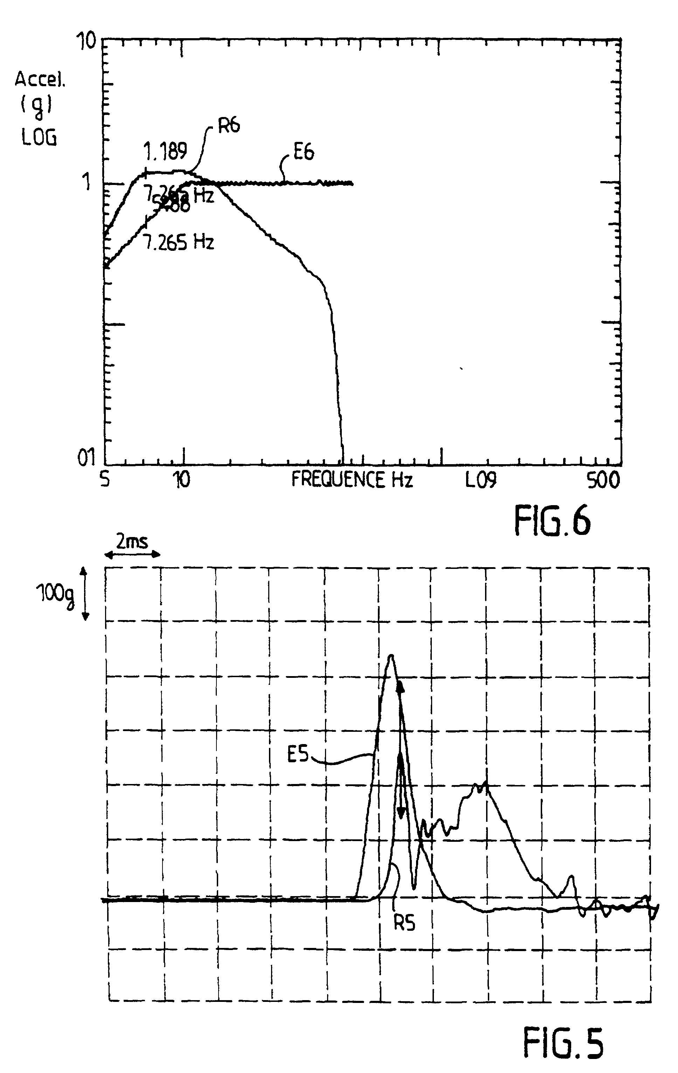

Des essais ont été effectués notamment avec une "machine à chocs" capable de travailler selon tous les axes. L'équipement placé dans l'étui est capable d'effectuer lui-même la mesure de l'accélération qu'il subit. L'accélération appliquée E5 était une forme d'onde semi-sinusoïdale de durée 3 ms, avec une valeur de crête de 500 g environ ; l'équipement inséré dans l'étui a subi (courbe R5) une pointe d'accélération de 240 g, brève et retardée, suivie d'une réponse étalée dans le temps, comme visible sur la figure 5. Aucun endommagement de l'équipement interne placé dans l'étui n'a été observé. Des accélérations obliques ou transverses sont également supportées sans dommage.

Il s'est donc avéré que cette structure donnait satisfaction, alors que tous les essais précédents s'étaient avérés infructueux. Les phénomènes physiques impliqués ne sont pas encore complètement compris. Il est estimé actuellement que le bon fonctionnement tient principalement à une mise en adéquation des caractéristiques de déformabilité élastique et de module d'élasticité à l'allongement, sans rupture, de l'enveloppe, par rapport à la "demande de déformation" du gel, lorsque ce dernier réagit à l'effet mécanique agressif dont on souhaite éviter les conséquences.

La caractéristique la plus spectaculaire de la structure proposée est son absence de talonnement, composante du problème posé qui a été particulièrement difficile à satisfaire.

On pense aussi que la compressibilité du gel de silicone a une certaine importance. Il en est de même pour les adhérences mécaniques du gel sur la peau de polyuréthanne.

Il semble aujourd'hui préférable que l'étui épouse assez étroitement, de préférence avec une très légère contrainte, la forme de l'objet à protéger. Toutefois, il n'est pas exclu que l'on puisse se passer de ce moyen, par exemple si l'effet mécanique agressif à combattre est autre qu'une très forte accélération ou un très fort choc.

Par ailleurs, il a été observé un certain "effet mémoire". C'est-à-dire que la structure, qui se déforme lorsqu'elle est seule au repos, est capable de retrouver rapidement sa forme de référence, dès qu'on y insère l'équipement, ou un gabarit de même forme. Par contre, elle ne semble pas souffrir sensiblement de chocs répétés.

Les essais effectués avec des structures plus grandes ont montré que pour conserver les mêmes propriétés mécaniques, il y avait lieu non pas de rendre le film plus épais, mais bien de prévoir une épaisseur supérieure de gel entre les deux parois du film.

De façon générale, il apparaît que le gel possède un rôle d'amortissement, ou de filtrage, à la manière d'une capacité, si l'on prend une analogie électrique. Pour que la brutalité du choc soit bien encaissée, il semble souhaitable que le film ne soit pas trop rigide (les films épais n'avaient pas donné satisfaction). Dans l'analogie électrique, ceci correspond à un effet selfique ou inductif limité. Toujours dans cette analogie, la "résistance" est définie par les frottements du gel sur lui-même et sur le film.

La structure semble réagir en deux étapes:
- une première phase, de type "inductif", où elle s'approche du ressort parfait; et
- une seconde phase, de type "capacitif", où elle s'approche de l'amortisseur parfait.

En particulier, aucune suroscillation perceptible n'est observée.

En d'autres termes, l'examen du comportement de cette structure aux chocs suggère qu'elle opère très près de l'amortissement critique en réponse à l'impulsion demi-sinusoïdale d'accélération de 500 g pendant 3 millisecondes.

Dans une approche plus mécanique, on prendra également en compte la combinaison du déplacement que subit le gel sous l'effet du choc, et de la haute déformation élastique qui en résulte au niveau du film sans déchirement, à la fois localement, en raison du coefficient de frottement gel/film, et/ou de l'adhérence gel/film, ainsi que de la propagation d'une sorte de déformation dans le gel, et, dans une certaine mesure, globalement, par effet de volume confiné (géométrie de la structure).

Ces paramètres sont naturellement difficiles à quantifier actuellement, même pour le seul choc à 500 g / 3 ms précité. L'homme de métier pourra cependant ajuster les caractéristiques de compressibilité et/ou viscosité du gel, en même temps que celles d'allongement élastique du film (coefficient et module), en fonction de la géométrie de l'étui (plus généralement de la structure), pour arriver à des résultats comparables.

Des structures semblables peuvent être mises au point pour d'autres types de formes d'excitation correspondant à des effets mécaniques agressifs, et qui étaient impossibles à éviter jusqu'à présent sous faible épaisseur.

Par "effets mécaniques", on entend ici des chocs et/ou accélérations, mais aussi plus généralement des vibrations, mécaniques et/ou acoustiques, ou autres, capables d'engendrer des effets mécaniques.

La figure 6 illustre la réponse fréquentielle du dispositif. L'excitation E6 était de 1 g de 10 Hz à 500 Hz. De 5 à 10 Hz, elle était limitée par une excursion maximale de 5 mm. Les essais dans tous les axes ont montré un très faible coefficient de surtension (Q < 2). Sur le dessin, la fréquence de résonance est d'environ 7,25 Hz, pour une accélération subie de 1,189 g, sous excitation de 0,5488 g. La fréquence de coupure à - 3 dB est d'environ 30 Hz. L'allure de la réponse R6 de la figure 6 suggère donc aussi un bon comportement du dispositif en mode vibratoire.

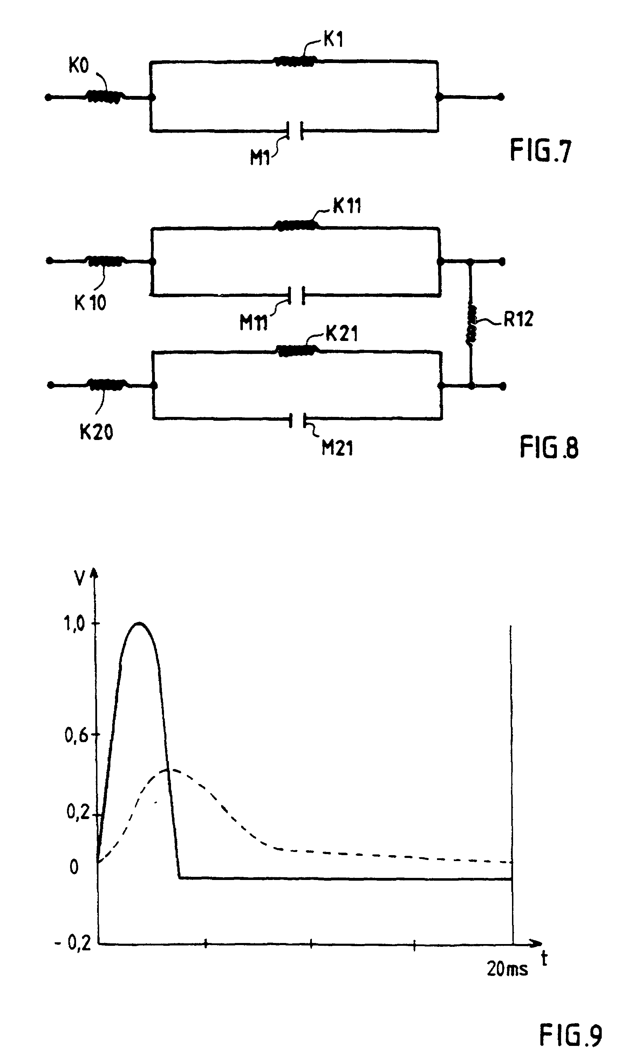

Des études complémentaires ont été entreprises pour mieux cerner le fonctionnement du dispositif proposé. Elles font appel à la rhéologie, décrite notamment dans l'ouvrage "Des Matériaux", de J.M. DORLOT, J.P. BAÏLON, J. MASOUNAVE, Editions de l'école polytechnique de Montréal (1986). Le chapitre "viscoélasticité" (page 171) décrit le comportement visqueux, lequel peut être assimilé à un montage électrique du type illustré en figure 7, où K1 et K0 sont des inductances, tandis que M1 est une capacité.

La figure 8 illustre alors le dispositif selon l'invention, avec K11, K10 et M11 pour le gel, K21, K20 et M21 pour l'enveloppe, et la résistance R12 pour l'interaction gel/enveloppe.

A partir des mesures réelles données en figure 6, il est possible de paramétrer les équations de fonctionnement d'un modèle électrique présumé équivalent à la structure décrite. En appliquant à ce modèle électrique une excitation demi-sinusoïdale théorique (figure 9, trait plein, ce qui ne correspond pas exactement à la montée/descente d'un piston en mécanique), on peut obtenir une réponse tension/temps "critique" (trait tireté, figure 9) qui correspond assez bien à la figure 6. Cette réponse critique est un net optimum parmi:
- des réponses trop réactives (capacitives ou inductives),
- des réponses peu réactives (valeurs de résistance prépondérantes) d'où un fonctionnement peu efficace dans un volume minimum,
- ces déséquilibres se traduisent par des distributions énergétiques mal adaptées lors du processus d'absorption de chocs.

Ces expériences, qui confirment l'analyse faite plus haut, peuvent servir à l'adaptation de toutes variantes de la structure décrite.

## Revendications

1. Dispositif formant filtre mécanique, du type comportant une structure munie d'une enveloppe (1) principalement réalisée sous la forme d'un film mince logeant un matériau amortisseur (9) capable de fluer avec la pression, l'enveloppe (1) étant réalisée dans un matériau de caractéristiques physiques, en particulier de coefficient d'allongement et d'élasticité, choisies pour supporter sans rupture les déplacements dus au fluage du matériau amortisseur, **caractérisé en ce que** l'interaction du matériau amortisseur qui possède un fluage variable avec la pression et du matériau de l'enveloppe procure une réponse comprenant un effet de ressort, suivi d'un effet d'amortisseur.

2. Dispositif selon la revendication 1, **caractérisé en ce que** le matériau amortisseur (9) est un gel.

3. Dispositif selon l'une des revendications 1 et 2, **caractérisé en ce que** le film mince (1) est en matériau synthétique thermoplastique.

4. Dispositif selon l'une des revendications 1 à 3, **caractérisé en ce que** le film mince (1) est assemblé pour donner à la structure une géométrie choisie, en coopération avec la viscosité du matériau amortisseur.

5. Dispositif selon la revendication 4, **caractérisé en ce que** ladite géométrie est définie par des parois de forme générale rectangulaire.

6. Dispositif selon l'une des revendications 4 et 5, **caractérisé en ce que** ladite géométrie définit un étui à double enveloppe, propre à loger un objet.

7. Dispositif selon la revendication 6, **caractérisé en ce que** l'étui comporte un alvéole propre à épouser étroitement l'objet.

8. Dispositif selon l'une des revendications 6 et 7, **caractérisé en ce que** l'étui comprend des parois renfermant le matériau amortisseur et délimitées chacune par une face interne et une face externe, et **en ce que** l'une au moins des parois de l'étui, de grande superficie, est plus épaisse que des parois de petite superficie.

9. Dispositif selon l'une des revendications 4 à 8, **caractérisé en ce que** le matériau enveloppe est plus épais au niveau des raccordements entre parois de l'étui.

10. Dispositif selon l'une des revendications précédentes, **caractérisé en ce que** le matériau amortisseur remplit sensiblement complètement l'enveloppe.

11. Procédé de protection mécanique d'un objet, dans lequel on prévoit sur un côté au moins de l'objet un dispositif selon l'une des revendications précédentes.

## Claims

1. Device forming a mechanical filter, of the type comprising a structure provided with an envelope (1) mainly made in the form of a thin film housing a damping material (9) capable of flowing plastically with pressure, the envelope (1) being made from a material with physical properties, in particular with an elongation and an elastic modulus, which are chosen to withstand, without breaking, the displacements due to the plastic flow of the damping material, **characterized in that** the interaction of the damping material, which has a plastic flow that varies with pressure, with the material of the envelope gives a response comprising a spring effect, followed by a damping effect.

2. Device according to Claim 1, **characterized in that** the damping material (9) is a gel.

3. Device according to either of Claims 1 and 2, **characterized in that** the thin film (1) is made of a synthetic thermoplastic.

4. Device according to one of Claims 1 to 3, **characterized in that** the thin film (1) is assembled to give the structure a chosen geometry, in cooperation with the viscosity of the damping material.

5. Device according to Claim 4, **characterized in that** the said geometry is defined by walls of generally rectangular shape.

6. Device according to either of Claims 4 and 5, **characterized in that** the said geometry defines a box with a double-walled envelope, suitable for housing an object.

7. Device according to Claim 6, **characterized in that** the box comprises a cavity suitable for fitting closely around the object.

8. Device according to either of Claims 6 and 7, **characterized in that** the box comprises walls containing the damping material, each one delimited by an inner face and an outer face, and **in that** at least one of the walls of the box with a large surface area is thicker than the walls of small surface area.

9. Device according to one of Claims 4 to 8, **characterized in that** the envelope material is thicker at the connections between walls of the box.

10. Device according to one of the preceding claims, **characterized in that** the damping material almost completely fills the envelope.

11. Method of mechanically protecting an object, in which a device according to one of the preceding claims is provided on at least one side of the object.

## Patentansprüche

1. Vorrichtung, die ein mechanisches Filter bildet, vom Typ, der eine Struktur aufweist, die mit einem Mantel (1) versehen ist, der hauptsächlich in Form eines Dünnstfilms ausgeführt ist, der in einem Dämpfungsmaterial (9) untergebracht ist, das in der Lage ist, mit dem Druck zu fließen, wobei der Mantel (1) in einem Material physikalischer Eigenschaften ausgeführt ist, insbesondere eines Dehnungs- und Elastizitätskoeffizienten, die ausgewählt wurden, um ohne zu zerreißen die Verlagerungen aufgrund des plastischen Fließens des Dämpfungsmaterials zu unterstützen,
**dadurch gekennzeichnet, dass** die Wechselwirkung des Dämpfungsmaterials, das ein mit dem Druck variables plastisches Fließen besitzt, und des Materials des Mantels eine Antwort herbeiführt, die einen Federeffekt, gefolgt von einem Dämpfungseffekt aufweist.

2. Vorrichtung nach Anspruch 1,
**dadurch gekennzeichnet, dass** das Dämpfungsmaterial (9) ein Gel ist.

3. Vorrichtung nach Anspruch 1 oder 2,
**dadurch gekennzeichnet, dass** der Dünnstfilm (1) ein thermoplastisches synthetisches Material ist.

4. Vorrichtung nach einem der Ansprüche 1 bis 3,
**dadurch gekennzeichnet, dass** der Dünnstfilm (1) zusammengefügt ist, um der Struktur eine gewünschte Geometrie im Zusammenwirken mit der Viskosität des Dämpfungsmaterials zu verleihen.

5. Vorrichtung nach Anspruch 4,
**dadurch gekennzeichnet, dass** die Geometrie durch Wände allgemein rechteckiger Form festgelegt ist.

6. Vorrichtung nach Anspruch 4 oder 5,
**dadurch gekennzeichnet, dass** die Geometrie ein Gehäuse mit doppeltem Mantel festlegt, das geeignet ist, ein Objekt zu lagern.

7. Vorrichtung nach Anspruch 6,
**dadurch gekennzeichnet, dass** das Gehäuse eine Zelle aufweist, die geeignet ist, sich genau an die Form des Objekts anzupassen.

8. Vorrichtung nach Anspruch 6 oder 7,
**dadurch gekennzeichnet, dass** das Gehäuse Wände umfasst, die das Dämpfungsmaterial einschließen und jeweils durch eine Innenfläche und eine Außenfläche begrenzt sind, und dass mindestens eine der Wände des Gehäuses einer großen Oberfläche dicker als Wände kleiner Oberfläche ist.

9. Vorrichtung nach einem der Ansprüche 4 bis 8,
**dadurch gekennzeichnet, dass** das Mantelmaterial auf Höhe der Verbindungen zwischen Wänden des Gehäuse dicker ist.

10. Vorrichtung nach einem der vorstehenden Ansprüche,
**dadurch gekennzeichnet, dass** das Dämpfungsmaterial im wesentlichen vollständig den Mantel ausfüllt.

11. Verfahren zum mechanischen Schutz eines Objekts, in welchem Verfahren an mindestens einer Seite des Objekts eine Vorrichtung nach einem der vorstehenden Ansprüche vorgesehen ist.
